# EUROPÄISCHE PATENTANMELDUNG

(11) **EP 0 616 286 A1**
(43) Veröffentlichungstag der Anmeldung: **21.09.1994**
(21) Anmeldenummer: 94103088.4
(22) Anmeldetag: 02.03.1994
(51) Int. Cl.: G06F 12/06

(54) **Verfahren zur Vergabe von Bus-Adressen**

(30) Priorität: 18.03.1993 DE 4308568
(71) Anmelder: TEMIC TELEFUNKEN microelectronic GmbH, D-74072 Heilbronn (DE)
(72) Erfinder: Schön, Josef, D-85072 Landershofen (DE)
(74) Vertreter: Maute, Hans-Jürgen, Dipl.-Ing.

(57) **Zusammenfassung**

Zur Verbindung der verschiedenen Stationen einer Datenverarbeitungsanlage dient ein Daten-BUS, auf den alle Teilnehmer zugreifen können. Erfindungsgemäß wird ein Verfahren zur automatischen Vergabe von BUS-Adressen angegeben, bei dem jeder Teilnehmer eine Zufallsadresse erzeugt, die von einer Steuereinheit abgefragt werden. Nach von der Steuereinheit erkannten Kollisionen wird dieses Verfahren wiederholt, bis jedem Teilnehmer eine eindeutige Adresse zugeordnet ist.

## Beschreibung

Die Erfindung betrifft ein Verfahren zum Betreiben einer Datenverarbeitungsanlage gemäß dem Oberbegriff des Patentanspruches 1.

Zur Verbindung der verschiedenen Stationen einer Datenverarbeitungsanlage dient ein BUS-System, über das Nachrichten in unzweideutiger Form von Steuereinheit zu Station bzw. Stationen oder von Station zu Station bzw. Stationen übertragen werden. Diese Stationen können außer Mikrocomputer auch Ein/Ausgabe-Prozessoren, Funktionsgeneratoren, Speicher, Ein/Ausgabe-Geräte wie z. B. Tastenfelder oder Anzeigeanordnungen oder auch Sensoren für physikalische/chemische Größen sein. Anwendungsgebiete für ein solches, mehrere Stationen verbindendes BUS-System betreffen die Meßdatenerfassung und die Prozeßsteuerung.

Die Art wie Informationen übermittelt werden, hängt wesentlich vom BUS-Konzept ab. In manchen Systemen sind die Stationen mit Stationsadressen versehen, wobei in den übermittelten Botschaften die Adressen von Sender und Empfänger enthalten sind. Eine Station wird zum Empfänger einer Botschaft, wenn sie ihre Stationsadresse in der Botschaft findet. Die Zuordnung der Stationsadressen kann hardware- oder softwaremäßig erfolgen.

Bei dem bekannten Random-Time-Verfahren werden die Stationsadressen erzeugt, indem sich die einzelnen Stationen nach einer zufälligen Zeit mit einer Zufallsadresse auf dem BUS melden. Um aber die Kommunikation auf dem BUS nicht zu stören, muß der Teilnehmer den BUS zunächst abhören, ob er frei ist. Ist der BUS frei, erfolgt eine Anmeldeprozedur, falls nicht, wartet der Teilnehmer eine zufallsgesteuerte Zeitdauer.

Dieses bekannte Verfahren hat also den Nachteil, daß die Stationen eine BUS-Mithörmöglichkeit aufweisen müssen, wodurch das gesamte System sehr aufwendig wird.

Die Aufgabe der Erfindung besteht darin, ein einfaches Verfahren zur Vergabe von BUS-Adressen anzugeben.

Diese Aufgabe wird durch die kennzeichnenden Merkmale des Patentanspruches 1 gelöst. Hiernach sendet zunächst eine Steuereinheit (Master) an die Stationen ein Kommando zur Adreß-Generierung, worauf jede Station für sich eine Zufallsadresse aus einem vorgegebenen Wertebereich erzeugt. Danach beginnt die Steuereinheit ausgehend von der niedrigsten Adresse des vorgegebenen Wertebereichs mittels des für das BUS-System vorgesehene Datenübertragungsprotokolls abzufragen, ob eine Station mit der jeweiligen Adresse vorhanden ist. Empfängt die Steuereinheit eine Antwort einer Station, die keinen Fehler aufweist, enthält diese Antwort eine gültige Adresse, so wird dieser Station durch die Steuereinheit mitgeteilt, daß seine Adresse akzeptiert wurde. Im anderen Fall, wenn also die Steuereinheit eine Antwort mit Fehler, also eine ungültige Adresse empfängt, erteilt sie keine Bestätigung. Gleichzeitig mit ihrer Antwort gibt sich eine Station zu erkennen, so daß die Steuereinheit eine eindeutige Zuordnung der aufgerufenen Adresse zu der sich meldenden Station vornehmen kann.

Der Vorteil dieses erfindungsgemäßen Verfahrens liegt darin, daß die Datenverarbeitungsanlage beliebig mit Stationen erweiterbar ist, solange dies die physikalischen Gegebenheiten des BUS-Systems erlauben, ohne daß Änderungen in der Software erforderlich wären. Daher ist ein solches BUS-System sehr flexibel und trotzdem einfach zu implementieren.

Bei einer vorteilhaften Weiterbildung der Erfindung setzt diejenige Station, deren Adresse bestätigt wurde ein Adreß-Flag. Somit wird sichergestellt, daß gemäß einer weiteren bevorzugten Ausbildung des erfindungsgemäßen Verfahrens bei Wiederholung desselben nach Empfang einer ungültigen Adresse durch die Steuereinheit nur diejenigen Stationen teilnehmen, die noch kein Adreß-Flag gesetzt haben.

Nach Empfang einer ungültigen Adresse kann die Steuereinheit vor einer Wiederholung des erfindungsgemäßen Verfahrens zunächst die gültigen Adressen derart umbenennen, daß sie nunmehr ausgehend vom niedrigsten Wert des zulässigen Bereiches in einer aufsteigenden Folge erzeugt werden. Diese umbenannten Adressen werden aus dem zulässigen Bereich für die sich daran anschließende Vergabe von Zufallsadressen ausgenommen. Dies führt zu einer weiteren Beschleunigung des Verfahrens zur Vergabe von BUS-Adressen, wenn mehr als 65 Stationen beteiligt sind.

Schließlich kann die automatische Vergabe von BUS-Adressen auch auf eine Gruppe von Stationen, wie beispielsweise von nur empfangenden Stationen, beschränkt werden.

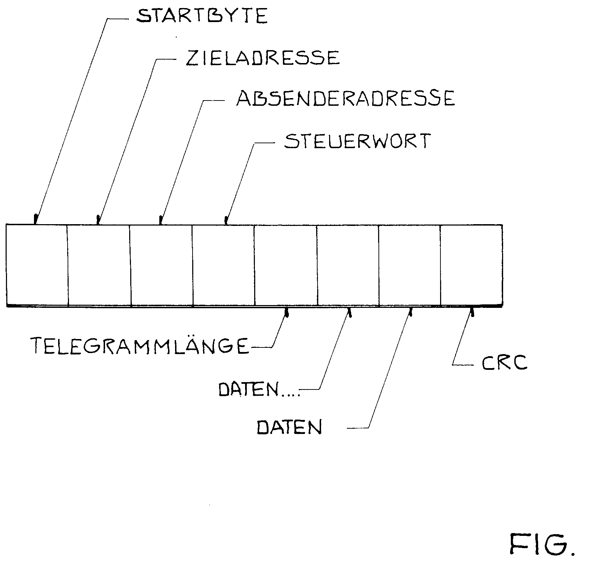

Im folgenden soll das erfindungsgemäße Verfahren anhand eines Ausführungsbeispieles im Zusammenhang mit der Figur erläutert werden. Die Figur zeigt ein Beispiel eines Datenübertragungsprotokolles gemäß der Erfindung.

Eine Datenverarbeitungsanlage besteht aus mehreren Stationen und einer Leitstation (Steuereinheit oder Masterstation), die über eine Leitung, eine sogenannte BUS-Leitung, verbunden sind. Es gibt verschiedene Stationstypen, die durch ihre Funktionen definiert sind, wobei Stationen mit gleichen Funktionen zu Gruppen zusammengefaßt werden können. Im folgenden wird von einem seriellen BUS ausgegangen.

Zur Übertragung von Nachrichten zwischen den Stationen dient beispielsweise das Übertragungsprotokoll gemäß der Figur, das für den logischen Ablauf einer Kommunikation zwischen den Stationen festlegt, wie diese Nachrichten in Zyklen ausgetauscht werden. Ein Nachrichtenzyklus besteht in der Regel aus Aufruf und Antwort. Eine Nachricht besteht aus Nachrichtenfelder, die als 8-Bit-Bytes dargestellt sind. Das erste Nachrichtenfeld "Start-Byte" zeigt den Beginn einer neuen Nachricht an und dient gleichzeitig der Synchronisation. Daran schließt sich die "Zieladresse" und "Absenderadresse" an, wobei eine bestimmte Zieladresse für das gleichzeitige Ansprechen aller Stationen reserviert ist (Globaladresse).

Das Nachrichtenfeld "Steuerwort" enthält für die jeweilige Station Steuerdaten, also Aktivitätsanweisungen.

Weiterhin wird die Länge der zu übertragenden Nachricht in dem Nachrichtenfeld "Telegrammlänge" angegeben. Ferner sind zwei Datenfelder zur Übertragung der eigenlichen Nachricht vorgesehen. Das Ende des Protokolls schließt ein Sicherungsfeld "CRC" ab. Dieses Cyclic-Redundancy-Code (CRC)-Feld besteht aus einem zyklisch wiederkehrenden Redundanz-Kontrollwort zur Feststellung von Übertragungsfehlern.

Zur Initialisierung der Datenverarbeitungsanlage sendet die Leitstation an alle Stationen bzw. an alle Stationen einer Gruppe ein Kommando zur Adreß-Generierung, wozu das Übertragungsprotokoll gemäß der Figur mit der o. g. Globaladresse verwendet wird. Daraufhin bestimmt jede Station für sich eine Zufallsadresse, beispielsweise aus einem freilaufenden Timer, in einem zulässigen Wertebereich von 8 Bit. Die Leitstation beginnt nun von der Adresse 01h an abzufragen, ob eine Station mit dieser Adresse vorhanden ist. Dies kann mit dem READ-Service des BUS-Protokolls durchgeführt werden. Empfängt die Leitstation eine Antwort, die keinen Übertragungsfehler aufweist (d. h. CRC-Check in Ordnung), wird diese mit der gültigen Antwort gesendete Adresse anerkannt und dem entsprechenden Teilnehmer durch die Leitstation mitgeteilt, daß seine Adresse akzeptiert wurde. Diese Station setzt für den Erfolg ein Adreß-Flag.

Weist die Antwort dagegen einen Übertragungsfehler auf, so ist dies für die Leitstation ein Hinweis darauf, daß mindestens zwei Stationen dieselbe Zufallsadresse haben. Deshalb erteilt sie keine Bestätigung.

Sind am Ende eines Abfragezyklus nur gültige Antworten von den Stationen zurückgeliefert worden, so kann jeder Station eine eindeutige Adresse zugeordnet werden. Ist dies nicht der Fall, so wird das Verfahren wiederholt, wobei aber auf das Kommando zur Adreß-Generierung nur diejenigen Stationen reagieren, die das Adreß-Flag über die erfolgreiche Adreßzuweisung nicht gesetzt haben.

Bei einer Stationszahl von weniger als 65 wird dieses erfindungsgemäße Verfahren sehr schnell zur Findung der BUS-Adressen führen. Sind jedoch in einer späteren Ausbaustufe der Datenverarbeitungsanlage mehr Stationen an den BUS anzuschließen, so kann das Verfahren zur Vergabe der BUS-Adressen dadurch beschleunigt werden, daß die erfolgreichen Adressen durch eine aufsteigende, vom niedrigsten zulässigen Wert beginnende Folge von Adressen ersetzt werden und für die daran sich anschließende Zufallsvergabe der zulässige Wertebereich die umbenannten Adressen ausnimmt.

## Patentansprüche

1. Verfahren zum Betreiben einer Datenverarbeitungsanlage, die aus mehreren sendenden und empfangenden Stationen sowie einer Steuereinheit (Master) aufgebaut ist, wobei die Kommunikation zwischen den Stationen und der Steuereinheit und den Stationen untereinander über ein BUS-System erfolgt, dadurch gekennzeichnet, daß zur Vergabe von BUS-Adressen an die Stationen folgende Verfahrensschritte durchgeführt werden:
a) die Steuereinheit sendet an die Stationen ein Kommando zur Adreß-Generierung,
b) anschließend bestimmt jede Station für sich eine Zufallsadresse aus einem vorgegebenen Wertebereich,
c) die Steuereinheit beginnt ausgehend von der niedrigsten Adresse des vorgegebenen Wertebereiches auf dem BUS abzufragen, ob eine Station mit der jeweiligen Adresse vorhanden ist,
d) empfängt die Steuereinheit eine gültige Antwort, wird dieser Station durch die Steuereinheit mitgeteilt, daß seine Adresse akzeptiert wurde und
e) empfängt dagegen die Steuereinheit eine ungültige Antwort, erteilt sie keine Bestätigung.

2. Verfahren nach Anspruch 1, dadurch gekennzeichnet, daß die Station, dessen Adresse bestätigt wurde, ein Adreß-Flag setzt.

3. Verfahren nach Anspruch 2, dadurch gekennzeichnet, daß die Steuereinheit nach Empfang einer ungültigen Antwort das Verfahren nach den Merkmalen a) bis e) mit denjenigen Stationen wiederholt, die noch kein Adreß-Flag gesetzt haben.

4. Verfahren nach Anspruch 2, dadurch gekennzeichnet, daß die Steuereinheit nach Empfang einer ungültigen Antwort die bisher gültigen Adressen in einer von der niedrigsten möglichen Adresse ausgehenden aufsteigenden Folge umbenennt und daß sich das daran anschließende Verfahren nach den Merkmalen a) bis e) so ausgeführt wird, daß die bisher vergebenen Adressen aus dem zulässigen Wertebereich für die Zufallsadressen ausgenommen sind.

5. Verfahren nach einem der vorangehenden Ansprüche, dadurch gekennzeichnet, daß die Stationen zu Gruppen zusammengefaßt sind und daß die Steuereinheit gruppenweise die Stationen zur Adreß-Generierung aufruft.
